# EUROPÄISCHE PATENTSCHRIFT

(11) **EP 4 039 894 B1**
(45) Veröffentlichungstag und Bekanntmachung des Hinweises auf die Patenterteilung: **12.07.2023**
(21) Anmeldenummer: 21155837.4
(22) Anmeldetag: 08.02.2021
(51) Int. Cl.: E03C 1/04, E03C 1/046, C02F 1/32

(54) **VORRICHTUNG ZUR ENTKEIMUNG VON TRINKWASSER**
DEVICE FOR STERILIZING DRINKING WATER
DISPOSITIF DE DÉSINFECTION DE L'EAU POTABLE

(43) Veröffentlichungstag der Anmeldung: 10.08.2022
(73) Patentinhaber: WS Produktentwicklung GmbH & Co. KG, 58730 Fröndenberg (DE)
(72) Erfinder: Schmidt, Wolfram, 58730 Fröndenberg (DE); Glüer, Sven, 58730 Fröndenberg (DE); Keuper, Stefan, 58708 Menden (DE)
(74) Vertreter: Patentanwälte Dörner & Kötter PartG mbB

(56) Entgegenhaltungen:
- WO-A1-95/15294
- WO-A1-2017/140790
- WO-A2-03/031338
- DE-A1-102014 015 642
- DE-A1-102018 002 089
- US-A1- 2003 205 454
- US-A1- 2020 290 893

## Beschreibung

Die Erfindung betrifft eine Vorrichtung zur Entkeimung von Trinkwasser einer Wasserentnahmestelle, insbesondere einer sanitären Wasserarmatur nach dem Patentanspruch 1.

Eine Problematik von Trinkwasserversorgungseinrichtungen liegt bekanntlich darin, dass sich in diesen Keime anlagern und vermehren, welcher Krankheiten verursachen können. In der DE 102 05 655 A1 ist eine Vorrichtung zur Entkeimung von Wasser mittels UV-Strahlen beschrieben, in der zu entkeimendes Wasser durch ein Quarzglasrohr geleitet wird, das in einem mit UV-Strahlern ausgestatteten Gehäuse angeordnet ist. Durch diese Vorrichtung werden jedoch direkt an den Zapfstellen und deren unmittelbarer Umgebung befindliche Keime nicht oder nur unzureichend reduziert.

In der US 2020/0290893 A1 ist eine Wasserarmatur beschrieben, bei der in dem Wasserhahn eine Anzahl von UVC-LEDs verbaut sind. Durch diese UVC-LEDs erfolgt eine Entkeimung des Trinkwasser bis hin zur Wasserausgabe. Nachteilig an der vorgeschlagenen Lösung ist jedoch, dass die Bestückung des Wasserhahns mit UVC-LEDs aufwändig ist. Zudem ist aufgrund des hohen Wasservolumenstroms eine hohe Strahlungsleistung erforderlich. Hinzu kommt, dass die in dem Wasserhahn verbauten LEDs nicht getauscht werden können. Darüber hinaus kann die Strahlungsleistung der verbauten LEDs durch den direkten Kontakt mit Wasser durch Ablagerungen beeinträchtigt werden. Weitere Vorrichtungen zur Entkeimung von Trinkwasser einer Wasserentnahmestelle sind in der US 2003/0205454 A1, der DE 10 2014 015642 A1, der DE 10 2018 002089 A1, der WO 95/15294 A1 und der WO 03/031338 A2 beschrieben.

Hier will die Erfindung Abhilfe schaffen. Der Erfindung liegt die Aufgabe zugrunde, eine Vorrichtung zur Entkeimung von Trinkwasser einer Wasserentnahmestelle, insbesondere einer sanitären Wasserarmatur bereitzustellen, die eine Entkeimung des Trinkwassers im unmittelbaren Bereich der Wasserentnahmestelle ermöglicht und bei der die erforderliche Strahlungsleistung vermindert ist. Gemäß der Erfindung wird diese Aufgabe durch eine Vorrichtung mit den Merkmalen des Patentanspruchs 1 gelöst.

Mit der Erfindung ist eine Vorrichtung zur Entkeimung von Trinkwasser einer Wasserentnahmestelle, insbesondere einer sanitären Wasserarmatur bereitgestellt, die eine Entkeimung des Trinkwassers in unmittelbarer Umgebung der Wasserentnahmestelle ermöglicht und bei der die zur Entkeimung erforderliche Strahlungsleistung vermindert ist. Dadurch, dass in dem Strömungskanal ein Reaktorkolben angeordnet ist, in dem wenigstens eine UVC-LED positioniert ist, wobei in dem Strömungskanal Mittel zur Verwirbelung eines durchfließenden Wasserstroms angeordnet sind, ist die Strömungsgeschwindigkeit des durchfließenden Wassers in diesem Bereich vermindert, wodurch die Bestrahlungszeit erhöht ist, weshalb die erforderliche Strahlungsleistung vermindert ist. Durch die Anordnung der wenigstens einen UVC-LED in dem Reaktorkolben ist ein Kontakt mit durchströmenden Wasser verhindert, wodurch Beeinträchtigungen der Strahlungsleistung entgegengewirkt ist.

Unter dem Begriff "Wasserarmatur" ist vorliegend sowohl eine einen Wasserhahn und/oder einen Duschkopf aufweisende Sanitärarmatur, als auch eine Unterputzarmatur zu subsumieren.

In Weiterbildung der Erfindung ist das Reaktorgehäuse hohlzylindrisch ausgebildet, wobei der Reaktorkolben zentrisch in dem Reaktorgehäuse angeordnet ist. Hierdurch ist eine gleichmäßige Umströmung des Reaktorkolbens erzielt. Vorteilhaft ist der Reaktorkolben zylindrisch ausgebildet. Alternativ können das Reaktorgehäuse und/oder der Reaktorkolben auch als Hohlkörper mit unrundem Querschnitt ausgebildet sein, beispielsweise in Form eines Polygons. Auch muss das Reaktorgehäuse und/oder der Reaktorkolben keine gerade Längsachse aufweisen. Beispielsweise ist auch eine ringförmige oder auch ringabschnittsförmige Gestaltung möglich.

In Ausgestaltung der Erfindung sind die Mittel zur Verwirbelung des durchfließenden Wasserstroms durch an der Innenwandung des Reaktorgehäuses zumindest bereichsweise umlaufend angeformte Rippen, insbesondere Ringstege gebildet, durch die partielle Reduzierungen des Innendurchmessers bewirkt sind. Hierdurch ist eine definierte Verwirbelung des Wasserstroms bewirkt.

In weiterer Ausgestaltung der Erfindung ist der Reaktorkolben zumindest bereichsweise, bevorzugt vollständig transparent ausgebildet. Hierdurch ist ein großflächiger Strahlungsdurchgang erzielt.

Vorteilhaft ist der Reaktorkolben aus Glas oder auch aus Polymethylmethacrylat (Acrylglas) hergestellt. Im Unterschied zu den allermeisten Kunststoffen, die mit der Zeit einen großen Teil ihrer Lichtdurchlässigkeit verlieren, behält Acrylglas auch über einen langen Zeitraum nahezu seine unveränderte Lichtdurchlässigkeit.

In Weiterbildung der Erfindung erstreckt sich der Reaktorkolben über mehr als die Hälfte der Länge des Reaktorgehäuses. Hierdurch ist eine große umströmte Bestrahlungsfläche erzielt. Bevorzugt erstreckt sich der Reaktorkolben über mehr als 75, insbesondere über mehr als 85% der Länge des Reaktorgehäuses.

In Ausgestaltung der Erfindung ist in dem Reaktorgehäuse im Wesentlichen orthogonal zum Reaktorkolben eine Trennplatte angeordnet, an der der Reaktorkolben befestigt ist, wobei die Trennplatte Öffnungen zum Durchtritt eines Wasserstroms aufweist. Hierdurch ist eine stabile Positionierung des Reaktorkolbens in dem Reaktorgehäuse ermöglicht. Darüber hinaus kann die Trennplatte zugleich als abschließender Deckel für den Reaktorkolben dienen. Bevorzugt ist an der Trennplatte eine Trägerplatte befestigt, auf der die wenigstens eine UVC-LED angeordnet ist und die sich mittig in den Reaktorkolben hinein erstreckt. Vorteilhaft kann die Trennplatte als Bestandteil eines Deckels ausgeführt sein, über den das Reaktorgehäuse verschlossen ist.

Die wenigstens eine UVC-LED ist mit einer Steuereinheit verbunden, über die deren Strahlungsintensität steuerbar ist. Bevorzugt ist die Steuereinheit in oder an dem Reaktorgehäuse angeordnet. Hierdurch ist eine bedarfsgerechte Einstellung der Strahlungsintensität der angeordneten UVC-LEDs ermöglicht.

Weiterhin ist in dem Reaktorgehäuse ein Strömungssensor angeordnet, der mit der Steuereinheit verbunden ist, wobei die Steuereinheit derart eingerichtet ist, dass eine Steuerung der Strahlungsintensität der wenigstens einen UVC-LED in einem Verhältnis in der von dem Strömungssensor ermittelten Strömungsgeschwindigkeit ermöglicht ist. Hierdurch ist eine gezielte Anpassung der Strahlungsintensität der wenigstens einen UVC-LED in Abhängigkeit von der jeweils anliegenden Strömungsgeschwindigkeit erzielt. Dabei muss es sich bei dem Verhältnis zwischen Strömungsgeschwindigkeit und Strahlungsintensität nicht um ein proportionales Verhältnis handeln. Vielmehr kann das Verhältnis in Abhängigkeit von der Strömungsgeschwindigkeit auch eine nicht lineare Funktion beschreiben. Die Anpassung der Strahlungsintensität kann stufenweise oder auch kontinuierlich erfolgen.

In Ausgestaltung der Erfindung mündet der Wasserzulauf in wenigstens einem Zulaufanschlussstück, an das ein Wasserzulaufschlauch anschließbar ist. Zusätzlich oder alternativ kann der Wasserablauf in wenigstens einem Ablaufanschlussstück münden, an das ein Wasserablaufschlauch anschließbar ist. Hierdurch ist eine einfache Einbindung der Vorrichtung in oder an einer Wasserentnahmestelle ermöglicht.

In Ausgestaltung der Erfindung weist das Reaktorgehäuse einen Befestigungsflansch zur Befestigung in oder an einer Wasserarmatur auf. Hierdurch ist die Montage der Vorrichtung in oder an der Wasserarmatur unterstützt.

In Weiterbildung der Erfindung ist der Strömungskanal in zwei Teilströmungskanäle unterteilt, die jeweils durch den Reaktorkolben begrenzt sind. Hierdurch ist die gleichzeitige UV-Bestrahlung von zwei Wasserströmen durch den Reaktorkolben ermöglicht.

In Ausgestaltung der Erfindung ist jeder Teilströmungskanal mit einem Zulaufanschlussstück zum Anschluss eines Wasserzulaufschlauchs verbunden. Hierdurch ist beispielsweise die gleichzeitige Entkeimung eines Warmwasser- und eines Kaltwasserstroms ermöglicht.

Gegenstand der vorliegenden Erfindung ist weiterhin eine Wasserarmatur mit einem Wasserablauf und wenigstens einem Anschluss für einen Wasserzulaufschlauch, die dadurch gekennzeichnet ist, dass zwischen dem wenigstens einen Anschluss und dem wenigstens einen zugehörigen Wasserzulaufschlauch eine Vorrichtung der vorstehenden Art angeordnet ist, deren Strömungskanal mit dem wenigstens einen Anschluss einerseits und dem wenigstens einen Wasserzulaufschlauch andererseits verbunden ist. Die so angeordnete Vorrichtung ist zwischen dem Wasserzulaufschlauch und der Wasserarmatur eingesetzt und kann daher einfach nachgerüstet oder ausgetauscht werden.

Gegenstand der Erfindung ist darüber hinaus eine Wasserarmatur mit einem Wasserablauf und wenigstens einem Anschluss für einen Wasserzulaufschlauch, die dadurch gekennzeichnet ist, dass zwischen dem wenigstens einen Anschluss und dem Wasserablauf innerhalb der Armatur eine Vorrichtung der vorstehenden Art angeordnet ist. In dieser Wasserarmatur ist die Vorrichtung vollständig integriert. Dabei ermöglicht die als kompaktes Bauteil ausgeführte Vorrichtung eine einfache Montage innerhalb des Herstellungsprozesses der Wasserarmatur.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

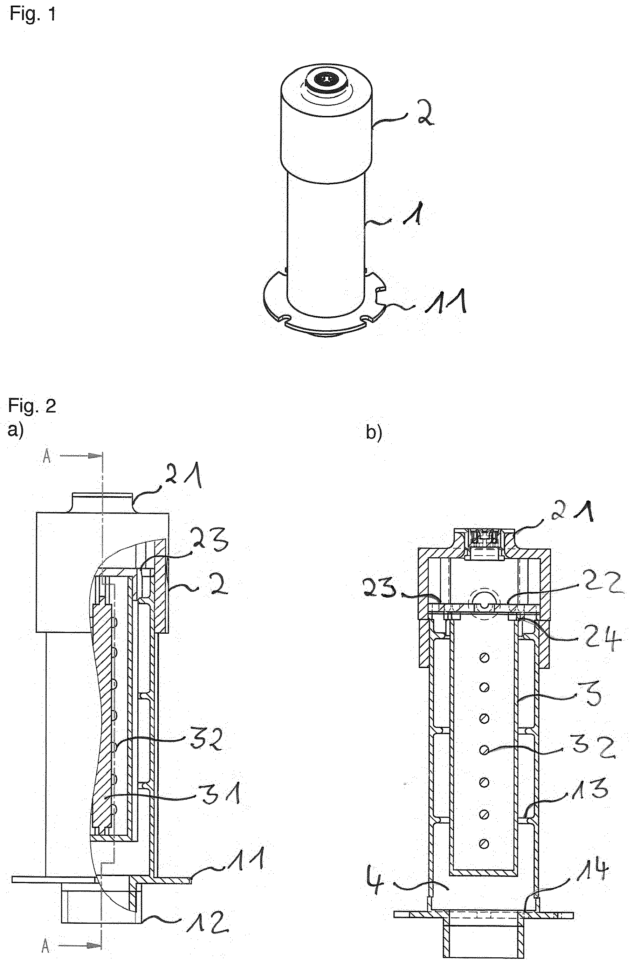

- Figur 1: die schematische Darstellung einer Vorrichtung zur Entkeimung von Trinkwasser;
- Figur 2: die Darstellung der Vorrichtung aus Figur 1
a) im Teilschnitt;
b) im Schnitt A-A;
- Figur 3: die schematische Darstellung einer Wasserarmatur mit einem Wasserhahn;
- Figur 4: die Darstellung der Wasserarmatur aus Figur 3 im Schnitt A-A;
- Figur 5: die schematische Darstellung einer Vorrichtung zur Entkeimung von Trinkwasser in einer weiteren Ausführungsform;
- Figur 6: die Darstellung der Vorrichtung aus Figur 5
a) im Teilschnitt;
b) im Schnitt A-A;
- Figur 7: die schematische Darstellung einer Wasserarmatur mit einem Wasserhahn in einer weiteren Ausgestaltung im Längsschnitt;
- Figur 8: die Detaildarstellung des Ausschnitts B der Wasserarmatur aus Figur 7.

Die als Ausführungsbeispiel gewählte Vorrichtung zur Entkeimung von Trinkwasser besteht im Wesentlichen aus einem Reaktorgehäuse 1, in dem ein Reaktorkolben 3 angeordnet ist, wobei zwischen dem Reaktorgehäuse 1 und dem Reaktorkolben 3 ein Strömungskanal 4 begrenzt ist.

Das Reaktorgehäuse 1 ist im Wesentlichen hohlzylindrisch ausgebildet und geht an einem Ende in einen Flansch 11 über, der ein Zulaufanschlussstück 12 aufweist, der in den von dem Reaktorgehäuse 1 begrenzten Strömungskanal 15 mündet. An der Innenwandung des Reaktorgehäuses sind axial beabstandet zueinander kreisringförmige Rippen 13 angeformt. Alternativ können die Rippen auch jedwede andere Form aufweisen, die eine turbulente Strömung durchfließenden Wassers bewirkt, wie beispielsweise eine elliptische oder wellenförmige Form. Zudem müssen die Rippen nicht umlaufend ausgebildet sein. Im Ausführungsbeispiel weisen die Rippen 13 eine gleichmäßige Breite und Tiefe auf. Diese können jedoch auch in Breite oder Tiefe unterschiedlich ausgeführt sein. Auch können Breite und Tiefe einer oder mehrerer Rippen in ihrem jeweiligen Verlauf variieren.

An seinem dem Flansch 11 gegenüberliegenden Ende ist das Reaktorgehäuse über einen Deckel 2 verschlossen. Der Deckel 2 ist in Form eines zylindrischen Napfes ausgebildet und weist einen Innendurchmesser auf, der im Wesentlichen dem endseitigen Außendurchmesser des Reaktorgehäuses 1 entspricht, auf das der Deckel 2 aufgestülpt ist. An seiner Grundseite ist an den Deckel 2 ein Ablaufstück 21 zum Wasseraustritt angeformt, in das der Strömungskanal 15 mündet. Beabstandet zu seiner Grundseite ist parallel zu dieser eine Trennplatte 22 angeordnet, die mit der Innenwandung des Deckels verbunden ist und die mit Öffnungen 23 für den Wasserdurchtritt versehen ist. Die Trennplatte 22 ist derart in dem Deckel 2 positioniert, dass sie auf dem endseitigen Rand des Reaktorgehäuses aufliegt.

An die Trennplatte 22 ist mittig eine Kolbenaufnahme 24 angeformt, die den Reaktorkolben 3 aufnimmt, der mit der Trennplatte 22 verbunden ist. Der Reaktorkolben ist im Ausführungsbeispiel als hohlzylindrischer Glaskörper ausgebildet, der sich über 85% der Länge des Reaktorgehäuses erstreckt. Mittig durch den Reaktorkolben 3 verläuft eine Trägerplatte 31, die als Leiterplatte ausgebildet und beidseitig mit UVC-LEDs 32 bestückt ist. Die Trägerplatte 31 ist mit einem Ende an dem Boden des Reaktorkolbens 3 und mit dem anderen Ende an der Trennplatte 22 befestigt. Auf der Trägerplatte 31 ist eine - nicht dargestellte - Batterie zur Stromversorgung der UVC-LEDs angeordnet. Weiterhin ist auf der Trägerplatte ein - nicht dargestelltes - Steuermodul vorhanden, über das die UVC-LEDs ansteuerbar sind.

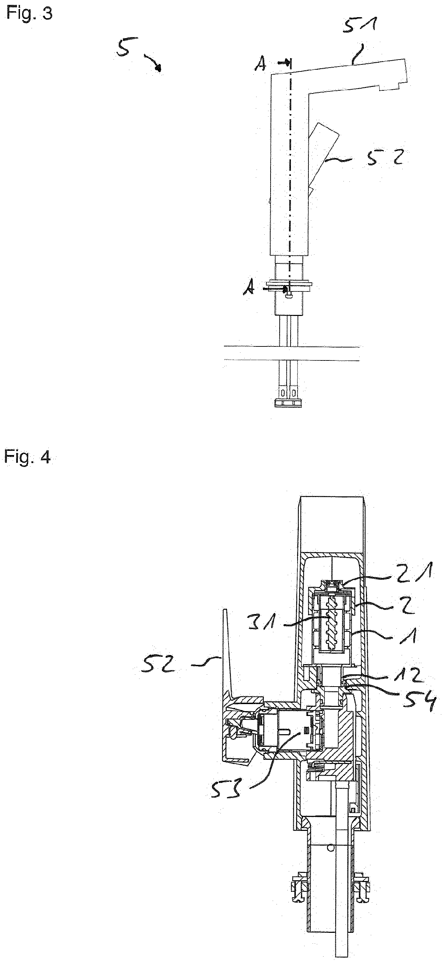

In Figur 4 ist die Vorrichtung in eine Wasserarmatur 5 eingebaut gezeigt. Die Wasserarmatur 5 umfasst einen Wasserhahn 51 und einen Bedienhebel 52, über den eine Ventilanordnung 53 bedienbar ist, über die der Wasserstrom durch den Wasserhahn 51 einstellbar ist. Dem Wasserhahn 51 vorgelagert ist eine Aufnahme 54, in der das Reaktorgehäuse 1 der Vorrichtung angeordnet ist. Dabei ist das Zulaufanschlussstück 12 des Flansches 11 dichtend mit der Ventilanordnung 53 verbunden. Das an dem Deckel 2 der Vorrichtung angeordnete Ablaufstück 21 ist vor dem Wasserhahn 51 positioniert. Nach Öffnung der Ventilanordnung 53 durch den Bedienhebel 52 fließt der Wasserstrom durch das Zulaufanschlussstück 12 in das Reaktorgehäuse 1, wobei er den Reaktorkolben 3 umströmt, bevor er die Öffnungen 23 der Trennplatte 22 durchströmt und durch das Ablaufstück 21 in den Wasserhahn 51 einströmt. Dabei wird der Wasserstrom innerhalb des Reaktorgehäuses 1 durch die Rippen 13 in Turbulenz versetzt, wodurch die Strömungsgeschwindigkeit reduziert wird. Während der hierdurch erzielten erhöhten Verweildauer des Wassers in dem Reaktorgehäuse 1 wird das Wasser durch Bestrahlung mittels der in dem Reaktorkolben 3 beidseitig der Trägerplatte 31 angeordneten UVC-LEDs 32 entkeimt.

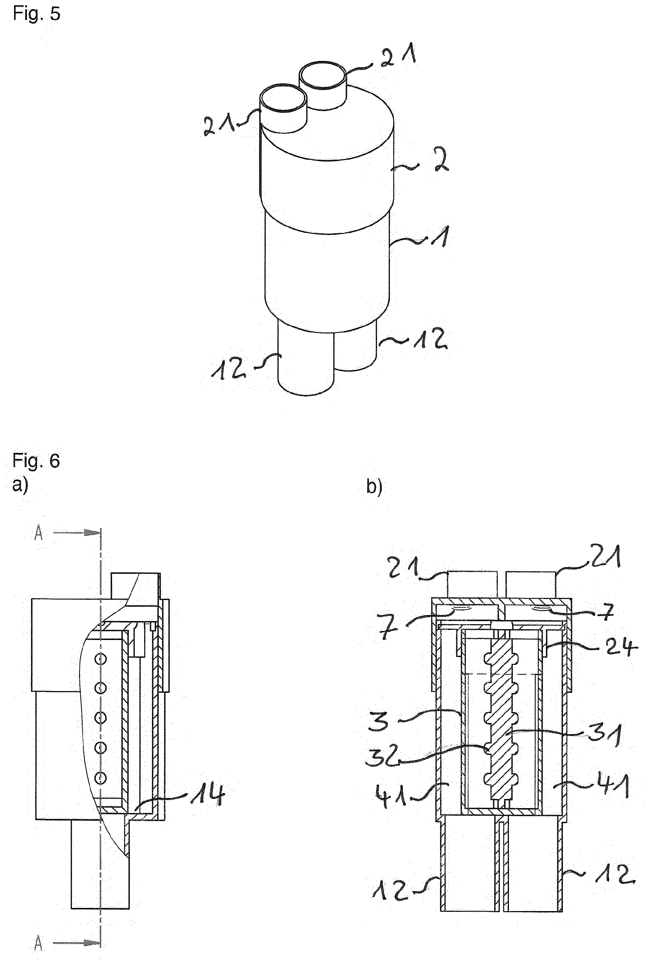

In Figur 5 ist eine weitere Ausführungsform der erfindungsgemäßen Vorrichtung zur Entkeimung von Trinkwasser gezeigt. Das Reaktorgehäuse 1 ist hier bodenseitig mit zwei Zulaufanschlusstücken 12 ersehen. Der Reaktorkolben 3 erstreckt sich über die gesamte Länge des Reaktorgehäuses 1 und liegt auf dessen Boden 14 auf, wodurch zwei Teilströmungskanäle 41 gebildet sind. An der Innenwandung des Reaktorgehäuses 1 sind wiederum - in Figur 5 nicht gezeigte - axial beabstandet zueinander angeordnete kreisringförmige Rippen vorhanden.

An den auf das Reaktorgehäuse 1 aufgestülpten Deckel 2 sind zwei Ablaufstücke 21 zum Wasseraustritt angeformt, die jeweils in einen der Teilströmungskanäle 41 münden sodass jeder Teilströmungskanal 41 mit einem Zulaufanschlussstück 12 und einem Ablaufstück 21 verbunden ist. Die Zulaufanschlusstücke 12 sind im Ausführungsbeispiel jeweils mit einem - nicht dargestellten - Außengewinde versehen; die Ablaufstücke 21 sind als Ablaufanschlussstücke ausgebildet und weisen eine - nicht dargestellte - Überwurfmutter auf.

Beabstandet zu seiner Grundseite ist parallel zu dieser in dem Deckel 2 wiederum eine Trennplatte 22 angeordnet, die mit der Innenwandung des Deckels verbunden ist und die mit Öffnungen 23 für den Wasserdurchtritt versehen ist. Die Trennplatte 22 ist derart in dem Deckel 2 positioniert, dass sie auf dem endseitigen Rand des Reaktorgehäuses aufliegt. Zwischen der Grundseite des Deckels 2 und der Trennplatte 22 ist in jedem Teilströmungskanal 41 ein Strömungssensor 7 angeordnet, der mit dem - nicht dargestellten, auf der Trägerplatte 22 angeordneten - Steuermodul verbunden ist. Das Steuermodul ist derart eingerichtet, dass es die Strahlungsintensität der UVC-LEDs 32 proportional zur von den Sensoren gemessene Strömungsgeschwindigkeit des Wasserstroms verstärkt bzw. verringert. Alternativ können in dem Steuermodul auch eine nicht proportionale Funktion oder auch einzelne Schwellwerte hinterlegt sein, auf deren Basis eine Einstellung der UVC-LEDs 32 in Abhängigkeit von der von dem Strömungssensoren 7 gemessenen Strömungsgeschwindigkeit erfolgt. Es ist auch möglich, lediglich in einem Teilströmungskanal 41 einen Strömungssensor 7 zu positionieren.

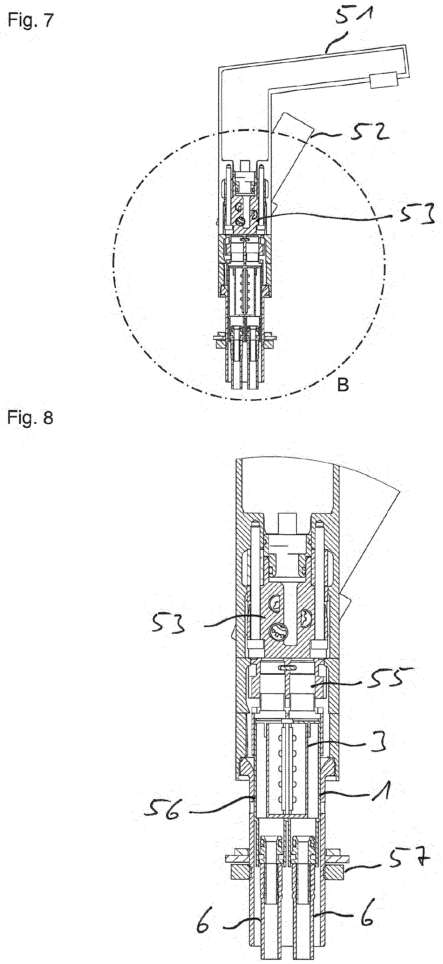

In Figur 7 ist die Vorrichtung an eine Wasserarmatur 5 installiert gezeigt. Die Wasserarmatur 5 umfasst wiederum einen Wasserhahn 51 und einen Bedienhebel 52, über den eine Ventilanordnung 53 bedienbar ist, über die der Wasserstrom durch den Wasserhahn 51 einstellbar ist. Die Ventilanordnung 53 ist als Mischventilanordnung ausgeführt und mit zwei Wasserzulaufanschlüssen 55 verbunden, die zum Anschluss eines Warmwasser- oder Kaltwasserzulaufschlauchs 6 mit einem Außengewinde versehen sind.

Die Vorrichtung ist in diesem Ausführungsbeispiel zwischen der Wasserarmatur 5 und den Warm- bzw. Kaltwasserzulaufschläuchen 6 angeordnet, wodurch eine einfache Nachrüstung einer bestehenden Installation ermöglicht ist. Dabei sind die Ablaufstücke 21 dichtend mit den Wasserzulaufanschlüssen 55 der Wasserarmatur verbunden, wobei die angeordneten Überwurfmuttern auf die Außengewinde der Wasserzulaufanschlüsse 55 aufgeschraubt sind. Die Warm- bzw. Kaltwasserzulaufschläuche 6, die üblicherweise eine Überwurfmutter aufweisen, sind entsprechend mit den Zulaufanschlussstücken 12 des Reaktorgehäuses 1 dichtend verbunden, wobei die Überwurfmuttern auf die hierzu vorgesehenen Außengewinde aufgeschraubt sind. Zum Schutz vor äußeren Einwirkungen ist die Wasserarmatur 5 mit einem rohrförmigen Gehäuseadapterstück 56 verbunden, das das Reaktorgehäuse 1 sowie auch dessen Verbindungsstellen mit den Warm- bzw. Kaltwasserzulaufschläuche 6 umschließt. Das Gehäuseadapterstück 56 ist mit einem Außengewinde versehen, auf das eine Befestigungsmutter 57 aufgeschraubt ist.

Nach Öffnung der Ventilanordnung 53 durch den Bedienhebel 52 fließen die Kalt- und Warmwasserströme durch die Zulaufanschlussstücke 12 durch die Teilströmungskanäle 41 aus den mit diesen verbundenen Ablaufstücken 21 in die Ventilanordnung 53, wo eine Mischung der Warm- und Kaltwasserströme erfolgt, bevor der so gebildete Mischwasserstrom aus dem Wasserhahn 51 austritt. Innerhalb des Reaktorgehäuses 1 werden die beiden Wasserströme durch die angeordneten Rippen in Turbulenz versetzt, wodurch die Strömungsgeschwindigkeit reduziert wird. Während der hierdurch erzielten erhöhten Verweildauer des Wassers in dem Reaktorgehäuse 1 wird das durch die beiden Teilströmungskanäle 41 fließende Wasser jeweils durch Bestrahlung mittels der in dem Reaktorkolben 3 auf der entsprechenden Seite der Trägerplatte 31 angeordneten UVC-LEDs entkeimt.

Im Gegensatz zu dem Ausführungsbeispiel gemäß Figur 3 sind die Teilströmungskanäle 41 in dem Reaktorgehäuse 1 bei geschlossener Ventilanordnung 53 mit stehendem Wasser gefüllt. Es empfiehlt sich daher, das Steuermodul derart einzurichten, dass bei geschlossener Ventilanordnung 53 zu bestimmten Zeitintervallen eine Aktivierung der UVC-LEDs 32 erfolgt, um eine fortscheitende Vermehrung und Ausbreitung von Keimen entgegenzuwirken.

## Patentansprüche

1. Vorrichtung zur Entkeimung von Trinkwasser einer Wasserentnahmestelle, insbesondere einer sanitären Wasserarmatur (5), mit einem Reaktorgehäuse (1), einem Wasserzulauf und einem Wasserablauf, die über einen Strömungskanal (4) miteinander verbunden sind, wobei in dem Strömungskanal (15) ein Reaktorkolben (3) angeordnet ist, in dem wenigstens eine UVC-LED (32) positioniert ist und wobei in dem Strömungskanal (4) Mittel zur Verwirbelung eines durchfließenden Wasserstroms angeordnet sind, **dadurch gekennzeichnet, dass** die wenigstens eine UVC-LED (32) mit einer Steuereinheit verbunden ist, über die deren Strahlungsintensität steuerbar ist, wobei in dem Reaktorgehäuse (1) ein Strömungssensor (7) angeordnet ist, der mit der Steuereinheit verbunden ist, wobei die Steuereinheit derart eingerichtet ist, dass eine Steuerung der Strahlungsintensität der wenigstens einen UVC-LED (32) in einem Verhältnis zu der vom dem Strömungssensor (7) gemeldeten Strömungsgeschwindigkeit ermöglicht ist.

2. Vorrichtung nach Anspruch 1, **dadurch gekennzeichnet, dass** das Reaktorgehäuse (1) hohlzylindrisch ausgebildet ist, wobei der vorzugsweise zylindrisch ausgebildete Reaktorkolben (3) zentrisch in dem Reaktorgehäuse (1) angeordnet ist.

3. Vorrichtung nach Anspruch 1 oder 2, **dadurch gekennzeichnet, dass** die Mittel zur Verwirbelung des durchfließenden Wasserstroms durch an der Innenwandung des Reaktorgehäuses (1) zumindest bereichsweise umlaufend angeformte Rippen (13) gebildet sind, durch die partielle Reduzierungen des Innendurchmessers bewirkt sind.

4. Vorrichtung nach einem der Ansprüche 1 bis 3, **dadurch gekennzeichnet, dass** der Reaktorkolben (3) zumindest bereichsweise transparent ausgebildet ist.

5. Vorrichtung nach einem der vorgenannten Ansprüche, **dadurch gekennzeichnet, dass** der Reaktorkolben (3) sich über mehr als die Hälfte, bevorzugt über mehr als 75%, besonders bevorzugt über mehr als 85% der Länge des Reaktorgehäuses (1) erstreckt.

6. Vorrichtung nach einem der Ansprüche 2 bis 5, **dadurch gekennzeichnet, dass** in dem Reaktorgehäuse (1) im Wesentlichen orthogonal zum Reaktorkolben (3) eine Trennplatte (22) angeordnet ist, an der der Reaktorkolben (3) befestigt ist, wobei die Trennplatte (22) Öffnungen (23) zum Durchtritt eines Wasserstroms aufweist.

7. Vorrichtung nach Anspruch 6, **dadurch gekennzeichnet, dass** an der Trennplatte (22) eine Trägerplatte (31) angeordnet ist, auf der die wenigstens eine UVC-LED (32) angeordnet ist und die sich bevorzugt zentrisch in den Reaktorkolben (3) erstreckt.

8. Vorrichtung nach einem der vorgenannten Ansprüche, **dadurch gekennzeichnet, dass** die Steuereinheit in oder an dem Reaktorgehäuse (1) angeordnet ist.

9. Vorrichtung nach einem der vorgenannten Ansprüche, **dadurch gekennzeichnet, dass** der Wasserzulauf in wenigstens einem Zulaufanschlussstück (12) mündet, an das ein Wasserzulaufschlauch (6) anschließbar ist und/oder dass der Wasserablauf in wenigstens einem Ablaufstück (21) mündet, an das ein Wasserablaufschlauch (6) anschließbar ist.

10. Vorrichtung nach einem der vorgenannten Ansprüche, **dadurch gekennzeichnet, dass** das Reaktorgehäuse (1) einen Flansch (11) zur Befestigung in oder an einer Wasserarmatur (5) aufweist.

11. Vorrichtung nach einem der vorgenannten Ansprüche, **dadurch gekennzeichnet, dass** der Strömungskanal (4) in zwei Teilströmungskanäle (41) unterteilt ist, die jeweils durch den Reaktorkolben (3) begrenzt sind.

12. Vorrichtung nach Anspruch 11, **dadurch gekennzeichnet, dass** jeder Teilströmungskanal (41) mit einem Zulaufanschlussstück (12) zum Anschluss eines Wasserzulaufschlauchs (6) verbunden ist.

13. Wasserarmatur mit einem Wasserablauf und wenigstens einem Wasserzulaufanschluss (55) für einen Wasserzulaufschlauch (6), **dadurch gekennzeichnet, dass** zwischen dem wenigstens einen Wasserzulaufanschluss (55) und dem wenigstens einen zugehörigen Wasserzulaufschlauch (6) eine Vorrichtung nach einem der vorgenannten Ansprüche angeordnet ist, deren Strömungskanal (4) mit dem wenigstens einen Wasserzulaufanschluss (55) einerseits und dem wenigstens einen Wasserzulaufschlauch (6) andererseits verbunden ist.

14. Wasserarmatur mit einem Wasserablauf und wenigstens einem Wasserzulaufanschluss (55) für einen Wasserzulaufschlauch (6), **dadurch gekennzeichnet, dass** zwischen dem wenigstens einen Wasserzulaufanschluss (55) und dem Wasserablauf innerhalb der Wasserarmature eine Vorrichtung nach einem der Ansprüche 1 bis 12 angeordnet ist.

15. Wasserarmatur nach Anspruch 13 oder 14, **dadurch gekennzeichnet, dass** die Wasserarmatur (5) eine Unterputzarmatur oder eine einen Wasserhahn (51) aufweisende Einbauarmatur ist.

## Claims

1. Device for sterilising drinking water of a water tapping point, in particular a sanitary water fitting (5), having a reactor housing (1), a water inlet and a water outlet, which are connected to one another via a flow channel (4), wherein a reactor piston (3) is arranged in the flow channel (15), in which at least one UVC LED (32) is positioned and wherein means for swirling a water flow passing through are arranged in the flow channel (4), **characterised in that** the at least one UVC LED (32) is connected to a control unit, via which the radiation intensity thereof can be controlled, wherein a flow sensor (7) is arranged in the reactor housing (1), which is connected to the control unit, wherein the control unit is set up in such a manner that control of the radiation intensity of the at least one UVC LED (32) in a ratio to the flow velocity reported by the flow sensor (7) is made possible.

2. Device according to claim 1, **characterised in that** the reactor housing (1) is hollow-cylindrical, wherein the preferably cylindrically designed reactor piston (3) is centrically arranged in the reactor housing (1).

3. Device according to claim 1 or 2, **characterised in that** the means for swirling the water flow passing through are formed by at least partially circumferentially formed ribs (13) on the inner wall of the reactor housing (1), by means of which partial reductions of the inner diameter are effected.

4. Device according to one of claims 1 to 3, **characterised in that** the reactor piston (3) is at least partially transparent.

5. Device according to one of the previous claims, **characterised in that** the reactor piston (3) extends over more than half, preferably more than 75%, particularly preferably over more than 85% of the length of the reactor housing (1).

6. Device according to one of claims 2 to 5, **characterised in that** in the reactor housing (1), substantially orthogonally to the reactor piston (3), a separating plate (22) is arranged, to which the reactor piston (3) is attached, wherein the separating plate (22) has openings (23) for the passage of a water flow.

7. Device according to claim 6, **characterised in that** a carrier plate (31) is arranged on the separating plate (22), on which carrier plate the at least one UVC LED (32) is arranged and which preferably extends centrally into the reactor piston (3).

8. Device according to one of the previous claims, **characterised in that** the control unit is arranged in or on the reactor housing (1).

9. Device according to one of the previous claims, **characterised in that** the water inlet opens into at least one inlet connecting piece (12), to which a water inlet hose (6) can be connected and/or that the water outlet opens into at least one outlet piece (21), to which a water outlet hose (6) can be connected.

10. Device according to one of the previous claims, **characterised in that** the reactor housing (1) has a flange (11) for attachment in or on a water fitting (5).

11. Device according to one of the previous claims, **characterised in that** the flow channel (4) is divided into two partial flow channels (41), which are each delimited by the reactor piston (3).

12. Device according to claim 11, **characterised in that** each partial flow channel (41) is connected to an inlet connecting piece (12) for connection of a water inlet hose (6).

13. Water fitting with a water outlet and at least one water inlet connection (55) for a water inlet hose (6), **characterised in that** between the at least one water inlet connection (55) and the at least one associated water inlet hose (6), a device according to one of the previous claims is arranged, whose flow channel (4) is connected to the at least one water inlet connection (55) on the one hand and the at least one water inlet hose (6) on the other hand.

14. Water fitting with a water outlet and at least one water inlet connection (55) for a water inlet hose (6), **characterised in that** between the at least one water inlet connection (55) and the water outlet, a device according to one of claims 1 to 12 is arranged within the water fitting.

15. Water fitting according to claim 13 or 14, **characterised in that** the water fitting (5) is a concealed fitting or an installation fitting having a water tap (51).

## Revendications

1. Dispositif de désinfection de l'eau potable à un point de prélèvement d'eau, notamment à une robinetterie d'eau sanitaire (5), comprenant un boîtier (1) de réacteur, une arrivée d'eau et un écoulement d'eau reliés ensemble via un canal de flux (4), sachant que dans le canal de flux (15) est disposé un piston (3) de réacteur dans lequel est positionné au moins une LED UVC (32) et sachant que dans le canal de flux (4) sont disposés des moyens pour faire entrer en turbulence un flux d'eau traversant, **caractérisé en ce qu'**au moins une LED UVC (32) est reliée à une unité de commande permettant d'en piloter l'intensité de rayonnement, sachant que dans le boîtier (1) de réacteur est disposé un capteur de flux (7) relié à l'unité de commande, sachant que l'unité de commande est configurée de sorte qu'est rendu possible un pilotage de l'intensité de rayonnement d'au moins une LED UVC (32) proportionnellement à la vitesse de flux signalée par le capteur de flux (7).

2. Dispositif selon la revendication 1, **caractérisé en ce que** le boîtier (1) de réacteur est configuré cylindrique creux, sachant que le piston (3) de réacteur configuré de préférence cylindrique est disposé centré dans le boîtier (1) de réacteur.

3. Dispositif selon la revendication 1 ou 2, **caractérisé en ce que** des moyens pour faire entrer en turbulence le flux d'eau traversant sont formés par des nervures (13) moulées périphériques, présentes au moins localement contre la paroi intérieure du boîtier (1) de réacteur, nervures qui provoquent des réductions partielles du diamètre intérieur.

4. Dispositif selon l'une des revendications 1 à 3, **caractérisé en ce que** le piston (3) de réacteur est configuré transparent au moins localement.

5. Dispositif selon l'une des revendications précédentes, **caractérisé en ce que** le piston (3) de réacteur s'étend sur plus de la moitié, de préférence sur plus de 75 % et de façon particulièrement préférentielle sur plus de 85 % de la longueur du boîtier (1) de réacteur.

6. Dispositif selon l'une des revendications 2 à 5, **caractérisé en ce que** dans le boîtier (1) de réacteur est disposée une plaque séparatrice (22) essentiellement perpendiculaire au piston (3) de réacteur, plaque contre laquelle est fixé le piston (3) de réacteur, sachant que la plaque séparatrice (22) présente des ouvertures (23) laissant passer un flux d'eau.

7. Dispositif selon la revendication 6, **caractérisé en ce que** contre la plaque de séparation (22) est disposée une plaque support (31) sur laquelle est disposée au moins une LED UVC (32) et qui s'étend de préférence centrée dans le piston (3) de réacteur.

8. Dispositif selon l'une des revendications précédentes, **caractérisée en ce que** l'unité de commande est disposée dans ou contre le boîtier (1) de réacteur.

9. Dispositif selon l'une des revendications précédentes, **caractérisée en ce que** l'arrivée d'eau aboutit dans au moins une pièce de raccordement (12) de l'arrivée, pièce à laquelle un flexible (6) d'arrivée d'eau est raccordable, et/ou que l'évacuation d'eau aboutit dans au moins une pièce d'évacuation (21) à laquelle un flexible (6) d'évacuation d'eau est raccordable.

10. Dispositif selon l'une des revendications précédentes, **caractérisé en ce que** le boîtier (1) de réacteur présente une bride (11) pour la fixation dans ou contre une robinetterie d'eau (5).

11. Dispositif selon l'une des revendications précédentes, **caractérisé en ce que** le canal de flux (4) est subdivisé en deux canaux de flux partiels (41) limités chacun par le piston (3) de réacteur.

12. Dispositif selon la revendication 11, **caractérisé en ce que** chaque canal de flux partiel (41) est relié à une pièce de raccordement d'arrivée (12) à laquelle raccorder un flexible d'arrivée d'eau (6).

13. Robinetterie d'eau avec une évacuation d'eau et au moins un raccord d'arrivée d'eau (55) pour un flexible d'arrivée d'eau (6), **caractérisée en ce qu'**entre au moins un raccord d'arrivée d'eau (55) et au moins un flexible d'arrivée d'eau (6) afférent est disposé un dispositif selon l'une des revendications précédentes, dispositif dont le canal de flux (4) est relié à au moins un raccord d'arrivée d'eau (55) d'une part, et à au moins un flexible d'arrivée d'eau (6) d'autre part.

14. Robinetterie d'eau avec une évacuation d'eau et au moins un raccord d'arrivée d'eau (55) pour un flexible d'arrivée d'eau (6), **caractérisée en ce qu'**entre au moins un raccord d'arrivée d'eau (55) et l'évacuation d'eau à l'intérieur de la robinetterie d'eau est disposé un dispositif selon l'une des revendications 1 à 12.

15. Robinetterie d'eau selon la revendication 13 ou 14, **caractérisée en ce que** la robinetterie d'eau (5) est une robinetterie sous crépi ou une robinetterie incorporée présentant un robinet à eau (51).
